# EUROPÄISCHE PATENTSCHRIFT

(11) **EP 0 477 568 B1**
(45) Veröffentlichungstag und Bekanntmachung des Hinweises auf die Patenterteilung: **06.08.1997**
(21) Anmeldenummer: 91114446.7
(22) Anmeldetag: 28.08.1991
(51) Int. Cl.: H02J 9/06

(54) **Anordnung zum Betrieb von Verbrauchern an einer redundanten Stromversorgung**
Arrangement for operating loads powered by a redundant power supply
Dispositif d'alimentation d'utilisateurs par une alimentation redondante

(30) Priorität: 24.09.1990 DE 4030123
(43) Veröffentlichungstag der Anmeldung: 01.04.1992
(73) Patentinhaber: ROBERT BOSCH GMBH, 70442 Stuttgart (DE)
(72) Erfinder: Freye, Klaus Dieter, W-7159 Auenwald (DE); Grünsch, Eckhardt, W-7173 Mainhardt (DE); Prisille, Klaus, Ing. grad., W-7150 Backnang (DE)

(56) Entgegenhaltungen:
- EP-A- 0 008 564
- DE-A- 2 640 337
- US-A- 4 629 964
- US-A- 4 659 942

## Beschreibung

Die Erfindung betrifft eine Anordnung zum Betrieb eines oder mehrerer Verbraucher an einer redundanten Stromversorgung.

Aus der EP 0 008 564 B1 sind zwei parallelspeisende Einrichtungen mit einem Entkopplungselement bekannt. Zwischen dem Zusammenschaltpunkt der parallelspeisenden Einrichtungen und dem Verbraucher ist ein Regler vorgesehen, der bei Normalbedingungen, d.h. außerhalb des Reglerbetriebs, einen Verbraucherstrom passieren läßt.

Wenn Verbraucher sowohl von einem Normalstromversorgungsgerät als auch von einem redundanten Stromversorgungsgerät, welches die Versorgung bei Ausfall oder Störungen des Normalstromversorgungsgerätes übernehmen muß, versorgt werden sollen, ist für eine ausreichende Entkopplung zwischen Normalstromversorgungsgerät und redundanten Stromversorgungsgerät zu sorgen. Eine solche Entkopplung wird üblicherweise über mechanische Schalter und/oder Entkopplungsdioden (DE 37 05 249 C2); EP 35 727 B1; EP 0 008 546 B1) erreicht. Aus der DE 37 05 249 C2 ist es bekannt, eine solche Entkopplungsdiode durch die Inversdiode eines Leistungs-MOSFETS auszubilden.

Aus der DE 33 45 736 A1 ist eine Anordnung zum Versorgen eines Verbrauchers zum Netz bzw. einem Akkumulator aus bekannt, bei der nach Unterschreiten einer minimalen Akkumulatorspannung der Verbraucher abgeschaltet wird.

Aus US-A 4 629 964 ist ebenfalls eine redundante Stromversorgung mit zwei parallelspeisenden Einrichtungen bekannt, die über ein Entkopplungselement voneinander getrennt sind. Zwischen dem Zusammenschaltpunkt der parallelspeisenden Einrichtungen und dem Verbraucher ist ein Spannungsregler vorgesehen, dem eine Strombegrenzungseinrichtung beigeordnet ist, um eine der Speiseeinrichtungen in Form einer Batterie, insbesondere bei einem Kurzschluß, gegen zu schnelle Entladung zu schützen.

Die DE-A 26 40 337 beschreibt eine Schaltungsanordnung zur Kurzschluß- und Überlastsicherung eines Leistungsschaltkreises. Ein Regler stellt dort bei Überstrom für eine vorgewählte Zeit einen durch einen Strombegrenzer geregelten Versorgungsstrom bereit. Bei Andauern des Überstroms wird der Verbraucher getrennt, bis die Ausschaltverzögerung eines Verzögerers abgelaufen ist.

Es ist Aufgabe der vorliegenden Erfindung eine leistungsarme und schnell wirksame Entkopplung anzugeben, wobei insbesondere Kurzschlüsse in Stromversorgungskreisen von dem oder den Verbraucher/n ferngehalten werden können. Diese Aufgabe wird durch die Merkmale des Anspruchs 1 gelöst. Die weiteren Ansprüche zeigen vorteilhafte Ausgestaltungen auf.

Die Erfindung besitzt den Vorteil, daß Betriebsausfälle bei der Stromversorgung von Verbrauchern weitgehend vermeidbar sind. Durch die Maßnahmen gemäß der Erfindung kann es nicht zu Betriebsausfällen benachbarter Verbraucher, die von der gleichen Quelle aus stromversorgt werden, kommen. Relativ lange Auslösezeiten von Sicherungen mit daraus resultierender Betriebsbeeinträchtigung spielen keine Rolle mehr. Auch nach länger andauernden Störungen sind insbesondere Verbraucher mit Ladekondensatoren schnell wieder betriebsbereit.

Anhand eines Stromlaufplanes wird ein Ausführungsformbeispiel einer Anordnung gemäß der Erfindung nun näher erläutert.

Der oder die Verbraucher sind im Stromlaufplan durch den Widerstand RV repräsentiert. Die Ladekondensatoren, z.B. Glättungskondensatoren, des oder der Verbraucher/s sind in der Kapazität CV parallel zum Widerstand RV zusammengefasst. Nachfolgend werden der oder die Verbraucher stets als ein Verbraucher angesprochen. Insbesondere beim Zuschalten eines Verbrauchers ist dafür zu sorgen, daß die Kapapzität CV schnell aufgeladen wird. Die Stromversorgungsspeiseeinrichtung E1 ist vorgesehen, um den Verbraucher im Normalbetrieb zu speisen. Im Redundanzbetrieb, z.B. wenn das Stromversorgungsgerät E1 ausgefallen ist oder ein Kurzschluß auf der Zuleitung zum Verbraucher auftritt, übernimmt die Stromversorgungsspeiseeinrichtung E2 die Speisung des Verbrauchers. Die beiden Einrichtungen E1 und E2 sind parallel zueinander angeordnet. Ihr Zusammenschaltpunkt ZS ist mit dem Verbraucher RV über eine gemeinsame Zuleitung ZU verbunden. Zur Entkopplung der beiden Einrichtungen E1 und E2 sind Entkopplungselemente in Form von niederohmigen Halbleiterschaltern vorgesehen, die als Entkopplungsdioden wirken. Diese Halbleiterschalter können beispielsweise als Bisynchrongleichrichter oder - wie im Stromlaufplan dargestellt - als Leistungs-Feldeffekttransistoren, die vorzugsweise in Rückwärtsrichtung betrieben werden, realisiert sein. Zwischen dem Zusammenschaltpunkt ZS der Einrichtungen E1 und E2 und dem Verbraucher RV ist erfindungsgemäß ein Konstantstromregler KS vorgesehen, der bei Normalbedingungen außerhalb seines Reglerbetriebs einen Verbraucherstrom IV möglichst verlustfrei von einer der speisenden Einrichtungen E1 bzw. E2 zum Verbraucher passieren läßt. Die Funktionsweise des Konstantstromreglers KS wird ausführlich im Anschluß an die Erläuterung der Funktionsweise der Entkopplungselemente V1 und V2 beschrieben.

Die Einrichtung E1 als Normalstromversorgungseinrichtung ist so ausgelegt, daß ihre Ausgangsspannung U_{N} höher ist als die Ausgangsspannung U_{R} der Redundanz-Stromversorgungseinrichtung E2. Bei Normalbedingungen, d.h. intakter Einrichtung E1 und keinem Kurzschluß auf der Zuleitung zum Verbraucher RV, ist die Spannung am nichtinvertierenden Eingang des Komparators K3, welcher die Ausgangsspannungen U_{N} und U_{R} der Einrichtungen E1 und E2 miteinander vergleicht, höher als die Spannung an seinem invertierenden Eingang. Der Transistor T1 als Bestandteil der aus den Transistoren T1 und T2 bestehenden Gegentakttreiberstufe, erhält dann vom Ausgang des Komparators K3 H-Potential und schaltet durch. Der Feldeffekttransistor V1, der an den Emitter des npn-Transistors T1 angeschlossen ist, ist dann ebenfalls durchgeschaltet. Für den Strom IV von der Einrichtung E1 zum Verbraucher RV ist dann nur der Bahnwiderstand des Feldeffekttransistors V1 zwischen Drain und Source von ca. 18 mΩ maßgebend. Die interne Diode DR des Feldeffekttransistors V1 ist dann unwirksam. Bei leitendem Feldeffekttransistor V1 führt der Ausgang des Komparators K4, dessen invertierender Eingang mit dem Emitterpotential der Gegentakttreibertransistoren T1 und T2 und dessen nicht invertierender Eingang mit einer Referenzspannung, die von der Ausgangsspannung U_{R} abgeleitet ist, beaufschlagt ist, L-Potential, da der pnp-Transistor T2 gesperrt ist und das Potential am invertierenden Eingang höher ist als am nichtinvertierenden Eingang. Über die Gegentakttreiberstufe, bestehend aus den Transistoren T3 und T4, die den Ausgang des Komparators K2 mit dem Steuereingang - Gate - des Feldeffekttransistors V2 verbindet, gelangt somit kein Steuerpotential zum Durchsteuern des Feldeffekttransistors V2. Bei gesperrtem Feldeffekttransistor V2 ist die Diodenschwelle der Rückwärtsdiode DR (getrichelt) voll wirksam und es kann aus dem Redundanzzweig, d.h. von der Einrichtung E2, keine Versorgung des Verbrauchers erfolgen, da die Ausgangsspannung U_{N} im Normalzweig höher ist als die Ausgangsspannung U_{R} im Redundanzzweig.

Wenn nun eine Störung im Normalzweig auftritt, z.B. bei Ausfall der Einrichtung E1 oder bei Kurzschluß in den Zuleitungen des Normalzweiges, wird die Spannung U_{N} geringer als die Spannung U_{R}. Das Potential am nichtinvertierenden Eingang des Komparators K3 ist dann negativer als an seinem invertierenden Eingang. Der Ausgang des Komparators K3 springt dann auf L-Potential, demzufolge schaltet der Transistor T2 durch und der Transistor T1 sperrt. Über den nun niederohmigen Transistor T2 kann die Gatekapazität des Feldeffekttransistors V1 schnell entladen werden. Dadurch sperrt der Feldeffekttransistor V1 sehr schnell. Das Ausgangssignal des Komparators K4 springt auf H-Potential, da der Transistor T2 leitend ist und über die Treiberstufe T3, T4 wird der Feldeffeekttransistor V2 schnell eingeschaltet. Seine interne Diode DR ist nun unwirksam, da ihr der niederohmige Bahnwiderstand des Feldeffekttransistors V2 parallel liegt. Nun erfolgt die Speisung des Verbrauchers vom Redundanzzweig aus, d.h. von der Einrichtung E2. Der Kurzschluß im Normalzweig wirkt sich im Redundanzzweig nur sehr kurzzeitig aus. Die Auswirkungszeit ist durch die Entladezeit der Gatekapazität des Feldeffekttransistors V1 bestimmt. Da der Verbraucher Ladekondensatoren - zusammengefaßt in der Kapazität CV - aufweist, macht sich der Kurzschluß beim Verbraucher meist kaum bemerkbar. Außerdem wird der Kurzschlußstrom während der Entladezeit der Gatekapazität des Feldeffekttransistors V1 durch die Zuleitungsinduktivitäten des Normalzweiges, bzw. des Redundanzzweiges begrenzt. Die bei herkömmlichen Entkopplungsdioden auftretende Verlustleistung ist durch die Maßnahmen nach der Erfindung stark reduziert.

Nachfolgend wird die Funktionsweise des Konstantstromreglers KS erläutert. Seine Hauptaufgabe ist es, bei einem Kurzschluß dafür zu sorgen, daß die Versorgungsspannung U_{N} bzw. U_{R} bei einem insbesondere kurzzeitigen Kurzschluß an einem Verbraucher nicht absinkt und damit Betriebsstörungen auch bei den anderen Verbrauchern auftreten. Wenn ein Überstrom bei einem Verbraucher auftritt, wird ein stromproportionaler Spannungsabfall mit dem Stromsensor RM erfaßt. Dieser Stromsensor liegt in Serie zu dem unter Normalbedingungen voll durchgesteuerten Feldeffekttransistor V3. Diese Serienschaltung ist zwischen dem Zusammenschaltpunkt ZS der beiden Entkopplungselemente V1 und V2 und dem Verbraucher RV angeordnet. Der Stromsensor RM ist im Ausführungsbeispiel als ohmscher Strommeßwiderstand mit einem Widerstandswert von beispielsweise 0,01 Ω ausgebildet. Als Stromsensor RM kann vorteilhafterweise der ohmsche Widerstand einer Schmelzsicherung oder einer Glättungsdrossel benutzt werden, sodaß kein zusätzliches Verlustleistung erzeugendes Bauelement eingesetzt werden muß. Eine Spannungsteilerkette bestehend aus den Widerständen R1, R2, R3 und R4 ist mit einer Hilfsspannung UH beaufschlagt. Am Widerstand R1, der zwischen dem Zusammenschaltpunkt ZS und dem nach Masse führenden Widerstand R2 angeordnet ist, fällt eine Referenzspannung Ur1 - erstes Referenzsignal - ab. Mit dieser Referenzspannung wird der invertierende Eingang des Komparators K1 beaufschlagt. Dem nicht invertierenden Eingang dieses Komparators K1 wird die stromproportionale Spannung des Stromsensors RM zugeführt. Bei einem Kurzschluß, bzw. Überstrom ist das Potential am nichtinvertierenden Eingang des Komparators K1 negativer als am nichtinvertierenden Eingang. Der Ausgang des Komparators K1 führt dann L-Potential und verbindet den Gateanschluß des Feldeffekttransistors V3 über die Diode D1 mit Masse. Damit beginnt der Feldeffekttransistor V3 zu sperren mit der Folge, daß der Spannungsabfall am Stromsensor RM kleiner wird als die Referenzspannung Ur1. Der Ausgang des Komparators K1 springt daher auf H-Potential. Über den hochohmigen Widerstand R5 kann nun die Gatekapazität des Feldeffekttransistors V3 von der Hilfsspannung UH etwas aufgeladen werden. Es fließt dann wieder mehr Strom durch den Stromsensor RM was dazu führt, daß der Komparator K1 nach einer von der Dimensionierung R1/RM abhängigen vorgebbaren Zeit, z.B. 30 mS, ausgangsseitig wieder auf L-Potential springt. Die Gatekapazität des Feldeffekttransistor V3 wird dann wieder etwas entladen. Der Feldeffekttransistor V3 pendelt durch das abwechselnde Laden und Entladen seiner Gatekapazität um einen definierten Arbeitspunkt und regelt so den Verbraucherstrom IV auf einen Wert, der dem Verhältnis Ur1/RM entspricht. Der Verbraucherstrom IV wird bei geregeltem Überstrombetrieb auf einen um ca. 20 % höheren Wert eingestellt
- nach der Beziehung: IV = Ur1/RM - als der Nennstrom unter Normalbedingungen.

Der Konstantstromregler KS weist zwei Schwellen auf. Die erste Schwelle stellt sich ein, wenn der Komparator K1 ausgangsseitig auf L-Potential springt. Die zweite Schwelle, die sich nach dem Spannungsabfall des Spannungsteilers R3, R4 richtet, bestimmt das Schaltverhalten des Komparators K2. Schaltet der Komparator K1 auf L-Potential, wird der Spannungsabfall am Widerstand R3 vergrößert, da der Mittelabgriff X des Spannnungsteilers über den Widerstand R6 und die Diode D2 dann mit Masse verbunden ist. Um zu verhindern, daß sich das Potential am Punkt X ständig im Rythmus des Ausgangspotentials am Komparator K1 ändert, wird der Spannungsabfall am Widerstand R3 über den Parallelzweig, bestehend aus der Serienschaltung eines Widerstandes R7 und einem Kondensator C2, integriert. Wenn nun der Komparator K1 auf L-Potential springt, vergrößert sich der Spannungsabfall am Widerstand R3. Der Komparator K2, dessen nichtinvertierender Eingang über den Widerstand R8 mit einer Hilfsspannung UH und der Spannung am Ladekondensator C1 beaufschlagt ist und dessen invertierender Eingang zum Punkt X führt, weist dann ausgangsseitig H-Potential auf. Der Kondensator C1 kann dann über den Widerstand R9 und über die Masseverbindung am Ausgang des Komparators K1 - L-Potential am Ausgang des Komparators K1 - aufgeladen werden. Durch Aufladen des Kondensators C1 wird die Spannungsdifferenz zwischen dem nichtinvertierenden und dem invertierenden Eingang am Komparator K1 verringert. Wenn durch den Aufladevorgang des Kondensators C1 das Potential am nichtinvertierenden Eingang das Potential am invertierenden Eingang zu unterschreiten beginnt - der Kondensator C1 ist dann auf die Spannung Ur2 am Widerstand R3 aufgeladen - springt der Ausgang des Komparators K2 auf L-Potential. Da dieser Komparatorausgang mit dem Gate des Feldeffekttransistors V3 verbunden ist, wird nun der Feldeffekttransistor V3 vollständig gesperrt. Die Phase, in der ein geregeleter Überstrom zum Verbraucher fließt, ist beendet. Der Verbraucher RV ist von der Stromversorgung getrennt. Der Spannungsabfall am Strommeßwiderstand RM wird Null. Dadurch springt der Ausgang des Komparators K1 auf H-Potential. Es kann dadurch vom Punkt X kein Strom mehr über den Widerstand R6 und die Diode D2 nach Masse fließen. Die zweite Schwelle - Referenzspannung Ur2 am Widerstand R 3 verkleinert sich wieder. Das Potential am invertierenden Eingang des Komparators K2 ist positiver als das Potential am nichtinvertierenden Eingang. Das Ausgangssignal des Komparators K2 bleibt durch Mitkopplung auf L-Potential und hält den Feldeffekttransistor V3 für eine vorgewählte Pausenzeit, z.B. 1,5 S, die durch die Entladezeitkonstante des Kondensators C1 festgelegt ist, dauernd gesperrt. Der Kondensator C1 kann sich nun über den Widerstand R8 entladen. Mit dieser Entladung steigt aber das Potential am nichtinvertierenden Eingang des Komparators K2. Wenn der Kondensator C1 soweit entladen ist, daß das Potential am nichtinvertierenden Eingang des Komparators K2 positiver wird als am invertierenden Eingang, springt der Ausgang des Komparators K2 auf H-Potential (Ende der Pausenzeit). Der Feldeffekttransistor V3 macht nun einen Wiedereinschaltversuch. Über das H-Potential am Ausgang des Komparators K2, das zum Gate des Feldeffekttransistors geführt wird, wird der Feldeffekttransistor V3 in den Reglerbetrieb gebracht. Zuerst fließt von einer Stromversorgungseinrichtung ein geregelter Überstrom. Durch den geregelten Überstrom wird die Kapazität CV schnell geladen. Wenn der Kurzschluß inzwischen aufgehoben ist springt der Komparator K1 auf H-Potential - Spannungsabfall am Strommeßwiderstand RM < Referenzspannung Ur1. Über den Widerstand R5, der mit der Hilfsspannung UH beaufschlagt ist, wird der Feldeffekttransistor V3 ganz durchgesteuert. Die Diode D1 sorgt dafür, daß der Komparator K2 nicht über die Widerstände R5 und R9 die Schwellenspannung Ur2 am Widerstand R3 beeinflußt. Der Konstantstromregler KS ist nun außerhalb seines Reglerbetriebs und es fließt der Verbrauchernennstrom. Sollte der Kurzschluß noch nicht aufgehoben sein, erfolgt nach einer Reglerphase mit Überstrom wieder ein Abschalten des Feldeffekttransistors V3 für die vorgewählte Pausenzeit. Durch die Pausensteuerung der Wiedereinschaltversuche mit geregeltem, d.h. auch begrenztem Überstrom, ist die am Konstantstromregler KS auftretende Verlustleistung relativ gering. Der Aufwand an Kühlmaßnahmen an den Bauelemente des Konstantstromreglers KS kann hierdurch auch gering gehalten werden.

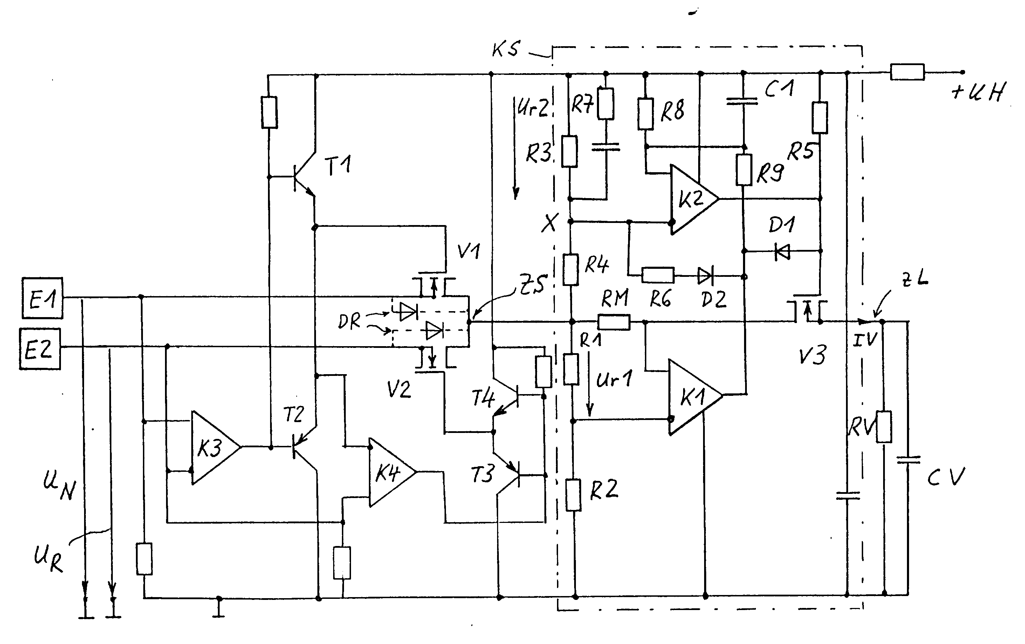

## Patentansprüche

1. Anordnung zum Betrieb eines oder mehrerer Verbraucher an einer redundante Stromversorgung, die mindestens zwei parallelspeisende Einrichtungen und mindestens ein Entkopplungselement zwischen den parallelspeisenden Einrichtungen aufweist, wobei zwischen dem Zusammenschaltpunkt (ZS) der parallelspeisenden Einrichtungen (E1, E2) und dem oder den Verbraucher/n (RV) ein Regler (KS) vorgesehen ist, der bei Normalbedingungen außerhalb seines Reglerbetriebs einen Verbraucherstrom (IV) von einer speisenden Einrichtung (E1, E2) zu dem oder den Verbraucher/n (RV) passieren läßt, und wobei der Regler (KS) ein Konstantstromregler ist, der bei Überstrom für eine vorgewählte Zeit einen geregelten über dem Nennstrom liegenden Versorgungsstrom für den oder die Verbraucher bereitstellt, bei Andauern des Überstroms den oder die Verbraucher (RV) von einer speisenden Einrichtung (R1, E2) trennt und nach einer vorgewählten Pausenzeit einen Wiedereinschaltversuch macht.

2. Anordnung nach Anspruch 1, dadurch gekennzeichnet, daß pro parallel speisender Einrichtung (E1, E2) ein Entkopplungselement (V1, V2) vorgesehen ist, wobei die Entkopplungselemente jeweils durch einen niederohmigen Halbleiterschalter, beispielsweise durch einen in Rückwärtsrichtung betriebenen Leistungs-FET oder einen Bisynchrongleichrichter, gebildet sind.

3. Anordnung nach Anspruch 1 oder 2, dadurch gekennzeichnet, daß die eine speisende Einrichtung (E1) die Normalversorgungseinrichtung ist und die andere/n Einrichtung/en (E2) die Redundanzeinrichtung ist, deren Nennausgangsspannung kleiner gewählt ist als die der Normalversorgungseinrichtung.

4. Anordnung nach einem der Ansprüche 1 bis 3, dadurch gekennzeichnet, daß der Konstantstromregler (KS) besteht aus:
- einem Stellglied (V3), dem ein Stromsensor (RM) in Serie geschaltet ist,
- einem ersten Komparator (K1), mittels dessen ein Signal vom Stromsensor (RM) mit einem ersten Referenzsignal (Ur1) vergleichbar ist,
- einer Verbindung zwischen dem Ausgang des ersten Komparators (K1) und dem Stellglied (V3) zum Ausräumen von Ladungsträgern aus dem Stellglied (V3) bei Ansprechen des ersten Komparators (K1),
- einem Kondensator (C1), der bei Ansprechen des ersten Komparators (K1) über eine Hilfsspannung (UH) und einen Widerstand (R9) aufladbar ist,
- einem zweiten Komparator (K2), mittels dessen ein zweites Referenzsignal (Ur2) mit der Ladespannung am Kondensator (C1) vergleichbar ist,
- einer Verbindung vom Ausgang des zweiten Komparators (K2) zum Stellglied (V3) zum Sperren desselben, wenn die Ladespannung am Kondensator (C1) größer ist als das zweite Referenzsignal (Ur2).

5. Anordnung nach Anspruch 4, dadurch gekennzeichnet, daß eine Verbindung (R6, D2) zwischen dem Referenzeingang des zweiten Komparators (K2) und dem Ausgang des ersten Komparators (K1) vorgesehen ist zur Beeinflussung der Höhe des zweiten Referenzsignals (Ur2) in Abhängigkeit der Ansprechzeit des ersten Komparators (K1).

6. Anordnung nach einem der Ansprüche 1 bis 5, dadurch gekennzeichnet, daß als Stromsensor (RM) der ohmsche Widerstand einer Schmelzsicherung benutzt wird.

7. Anordnung nach einem der Ansprüche 1 bis 5, dadurch gekennzeichnet, daß als Stromsensor (RM) der ohmsche Widerstand einer Glättungsdrossel benutzt wird.

8. Anordnung nach einem der Ansprüche 1 bis 7, dadurch gekennzeichnet, daß der geregelte Versorgungsstrom höher bemessen ist als der Nennstrom bei Normalbedingungen.

## Claims

1. Arrangement for operating one or more loads from a redundant power supply which has at least two parallel-supplying devices and at least one decoupling element between the parallel-supplying devices, a regulator (KS) being provided between the interconnection (ZS) of the parallel-supplying devices (E1, E2) and the load or loads (RV), which regulator (KS) allows a load current (IV) to pass from a supplying device (E1, E2) to the load or loads (RV) during normal conditions when its regulator is not operating, and the regulator (KS) being a constant-current regulator which, in the event of an overcurrent for a preselected time, provides a regulated supply current, which is greater than the rated current for the load or loads, and, if the overcurrent lasts, disconnects the load or loads (RV) from a supplying device (E1, E2) and makes an attempt to switch on again after a preselected pause time.

2. Arrangement according to Claim 1, characterized in that one decoupling element (V1, V2) is provided per parallel-supplying device (E1, E2), the decoupling elements in each case being formed by a low-impedance semiconductor switch, for example by a bisynchronous rectifier or a power FET operated in the reverse direction.

3. Arrangement according to Claim 1 or 2, characterized in that one supplying device (E1) is the normal supply device and the other device or devices (E2) is or are the redundant device, whose rated output voltage is chosen to be less than that of the normal supply device.

4. Arrangement according to one of Claims 1 to 3, characterized in that the constant-current regulator (KS) comprises:
- a final control element (V3), in series with which a current sensor (RM) is connected,
- a first comparator (K1), by means of which a signal from the current sensor (RM) can be compared with a first reference signal (Ur1),
- a connection between the output of the first comparator (K1) and the final control element (V3), in order to clear charge carriers out of the final control element (V3) when the first comparator (K1) responds,
- a capacitor (C1), which can be charged via an auxiliary voltage (UH) and a resistor (R9) when the first comparator (K1) responds,
- a second comparator (K2), by means of which a second reference signal (Ur2) can be compared with the charge voltage on the capacitor (C1),
- a connection from the output of the second comparator (K2) to the final control element (V3) in order to switch the latter off when the charge voltage on the capacitor (C1) is greater than the second reference signal (Ur2).

5. Arrangement according to Claim 4, characterized in that a connection (R6, D2) is provided between the reference input of the second comparator (K2) and the output of the first comparator (K1), in order to influence the magnitude of the second reference signal (Ur2) as a function of the response time of the first comparator (K1).

6. Arrangement according to one of Claims 1 to 5, characterized in that the non-reactive resistance of a fuse link is used as the current sensor (RM).

7. Arrangement according to one of Claims 1 to 5, characterized in that the non-reactive resistance of a smoothing inductor is used as the current sensor (RM).

8. Arrangement according to one of Claims 1 to 7, characterized in that the regulated supply current is designed to be higher than the rated current in normal conditions.

## Revendications

1. Dispositif pour faire fonctionner un ou plusieurs appareils consommateurs d'électricité sur une alimentation en courant redondante, qui présente au moins deux dispositifs d'alimentation en parallèle et au moins un élément de découplage entre les dispositifs d'alimentation en parallèle,
caractérisé en ce qu'
on prévoit entre le point de branchement commun (ZS) des dispositifs (E1, E2) l'alimentation en parallèle, et le ou les appareils utilisateurs d'électricité (RV) un régulateur (KS), qui dans des conditions normales fait passer en dehors de son fonctionnement de régulation une intensité d'appareil consommateur d'électricité (IV) d'un dispositif d'alimentation (E1, E2) à l'autre ou aux autres appareils consommateurs d'électricité (RV) et en ce que le régulateur (KS) est un régulateur d'intensité constante, qui en cas de surintensité pendant un temps choisi au préalable tient prête une intensité d'alimentation située au-dessus de l'intensité nominale pour l'appareil consommateur d'électricité ou les appareils consommateurs d'électricité, qui sépare le ou les appareils consommateurs d'électricité (RV) d'un dispositif d'alimentation (R1, R2) en maintenant la surintensité et fait un essai de réenclenchement après un temps de pause choisi au préalable.

2. Dispositif selon la revendications 1,
caractérisé en ce que
l'on prévoit un élément de découplage (V1, V2) par dispositif (E1, E2) d'alimentation en parallèle, les éléments de découplage étant formés respectivement par un commutateur à semi-conducteur de faible impédance, par exemple par un transistor à effet de champ FET fonctionnant en arrière ou un redresseur bisynchrone.

3. Dispositif selon la revendication 1 ou 2,
caractérisé en ce que
l'un des dispositif d'alimentation (E1) est le dispositif d'alimentation normal et l'autre ou les autres dispositifs (E2) est ou sont le dispositif redondant, dont la tension de sortie nominale est choisie plus petite que celle du dispositif d'alimentation nominal.

4. Dispositif selon l'une des revendications 1 à 3,
caractérisé en ce que
le régulateur d'intensité constante (KS) se compose de :
- un organe de réglage (V3) qui est monté en série avec un détecteur d'intensité (RM),
- un premier comparateur (K1) au moyen duquel on peut comparer un signal du détecteur d'intensité (RM) à un premier signal de référence (Ur1).,
- une liaison entre la sortie du premier comparateur (K1) et l'organe de réglage (V3) pour évacuer des porteurs de charge de l'organe de réglage (V3) lors de l'activation du premier comparateur (K1),
- un condensateur (C1) qui lors de l'activation du premier comparateur (K1) peut être chargé au moyen d'une tension auxiliaire (UH) et d'une résistance (R9),
- un second comparateur (K2), au moyen duquel on peut comparer un second signal de référence (Ur2) à la tension de charge sur le condensateur (C1),
- une liaison de sortie du second comparateur (K2) avec l'organe de réglage (V3) pour bloquer celui-ci, quand la tension de charge sur le condensateur (C1) est plus grande que le second signal de référence (Ur2).

5. Dispositif selon la revendication 4,
caractérisé en ce que
l'on prévoit une liaison (R6, D2) entre l'entrée de référence du second comparateur (K2) et la sortie du premier comparateur (K1) pour influencer le niveau du second signal de référence (Ur2) en fonction du temps d'activation du premier comparateur (K1).

6. Dispositif selon l'une des revendications 1 à 5,
caractérisé en ce que
l'on utilise comme détecteur d'intensité (RM) la résistance ohmique d'un fusible.

7. Dispositif selon l'une des revendications 1 à 5,
caractérisé en ce que
l'on utilise comme détecteur d'intensité (RM) la résistance ohmique d'une bobine de lissage.

8. Dispositif selon l'une des revendications 1 à 7,
caractérisé en ce que
le courant réglé d'alimentation est plus élevé que le courant nominal en conditions normales.
